# EUROPÄISCHE PATENTANMELDUNG

(11) **EP 4 235 838 A1**
(43) Veröffentlichungstag der Anmeldung: **30.08.2023**
(21) Anmeldenummer: 22158293.5
(22) Anmeldetag: 23.02.2022
(51) Int. Cl.: H01M 4/06, H01M 4/24, H01M 4/38, H01M 4/50, H01M 4/62, H01M 4/90, H01M 6/14, H01M 12/06

(54) **ELEKTROLYTZUSAMMENSETZUNG UND PRIMÄRZELLE ENTHALTEND DIE ELEKTROLYTZUSAMMENSETZUNG UND INSBESONDERE NANO-PARTIKULÄRE SILIZIUM-PARTIKEL**

(71) Anmelder: Evonik Operations GmbH, 45128 Essen (DE); Forschungszentrum Jülich GmbH, 52425 Jülich (DE)
(72) Erfinder: Die Erfindernennung liegt noch nicht vor
(74) Vertreter: Evonik Patent Association

(57) **Zusammenfassung**

Gegenstand der Erfindung ist eine Primärzelle mit Silizium als Anodenmaterial in Form von Silizium-Partikeln mit einer Partikelgröße im Bereich von 0,1 µm bis 20 µm. Gleichfalls ist Gegenstand der Erfindung eine mehrzellige Batterie sowie ein System umfassend eine solche Batterie.

## Beschreibung

Gegenstand der Erfindung ist eine Primärzelle mit Silizium als Anodenmaterial in Form von Silizium-Partikeln mit einer Partikelgröße im Bereich von 0,1 µm bis 20 µm. Gleichfalls ist Gegenstand der Erfindung eine mehrzellige Batterie sowie ein System umfassend eine solche Batterie.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es die Leistungsfähigkeit und Lebensdauer einer Silizium enthaltenden galvanischen Zelle, insbesondere alkalischen galvanischen Zelle, zu verbessern. Ferner soll die Leistungsdichte einer solchen Silizium enthaltenden galvanischen Zelle verbessert werden und eine hohe Anfangsspannung einstellbar sein.

Des Weiteren bestand die Aufgabe eine Silizium enthaltende galvanische Zelle bereitzustellen, die vorzugsweise frei von Lithium ist, wobei vorzugsweise bedeutet frei von Lithium, dass der Gehalt an Lithium im geladenen Zustand unter 0,1 Gew.-% in der Gesamtzusammensetzung der Primärzelle beträgt, insbesondere umfassend die Anode, die Kathode und den Elektrolyten, vorzugsweise beträgt der Gehalt an Lithium im Elektrodenmaterial der Anode im geladenen Zustand unter 0,1 Gew.-%. Vorzugsweise soll die galvanische Zelle Edukte und Reaktionsprodukte aufweisen, die aus Recyclingprozessen der Silizium-Waferherstellung stammen, Nebenprodukte sind und/oder in Recyclingprozessen weiterverwendet werden können.

Gelöst werden die Aufgaben mit dem Gegenstand des Anspruchs 1 sowie mit einer mehrzelligen Batterie oder einem System zur Datenverarbeitung nach Anspruch 11 und der Verwendung nach Anspruch 15. In den Unteransprüchen sowie in der Beschreibung sind bevorzugte Ausführungsformen detaillierter dargestellt.

Gegenstand der Erfindung ist eine elektrochemische Primärzelle aufweisend eine Anode, eine Kathode sowie mindestens einen Separator, wobei der Separator die Kathode und die Anode voneinander separiert, wobei die Primärzelle eine Elektrolytlösung enthält, wobei die Kathode als Material, insbesondere das Kathodenmaterial, Mangandioxid und optional Kohlenstoff enthaltende Leitfähigkeitsvermittler umfasst, und die Anode als Anodenmaterial Silizium umfasst, und insbesondere ein Anteil des Siliziums, vorzugsweise das Silizium teilweise bis vollständig, besonders bevorzugt ein Anteil von 0,1 bis 100 Gew.-% in Bezug auf den Gehalt an Silizium im Anodenmaterial von 100 Gew.-%, in Form von Silizium-Partikeln umfassend Silizium-Partikel mit einer Partikelgröße im Bereich von 0,1 µm bis 20 µm oder als Folie mit einer Schichtdicke von größer gleich 0,1 µm vorliegt, insbesondere von 50 bis 100 µm. Bevorzugt liegen Silizium-Partikel mit einer Partikelgröße von 5 bis 20 µm vor.

Ebenso können die Silizium-Partikel Kohlenstoff und Silizium enthalten und optional können die Partikel mindestens eine allotrope Kohlenstoffmodifikation umfassen. Ferner kann das Anodenmaterial einen Gehalt an Eisen von größer gleich 0,02 mg/kg aufweisen, insbesondere einen Eisengehalt von größer gleich 0,02 mg/kg Silizium im Anodenmaterial aufweisen.

Bevorzugt liegen die Silizium-Partikel als kristalline Silizium-Partikel vor, die umfassen monokristalline und/oder polykristalline Silizium-Partikel und/oder Silizium-Partikel, die umfassen Agglomerate und/oder Aggregate von im wesentlichen amorphen Silizium-Primärpartikeln mit einer Primärpartikelgröße von 1 nm bis 3000 nm oder Gemische dieser, wobei insbesondere die Agglomerate und/oder Aggregate eine Größe von 100 bis 3000 nm aufweisen.

Ferner ist es bevorzugt, wenn die Elektrolytlösung eine wässrige, alkalische Elektrolytzusammensetzung ist, die umfasst mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen, wobei die Alkylenoxid-Gruppen in der Polyalkylenoxid-Gruppen aufweisende Verbindung ausgewählt sind aus Alkylenoxid-Gruppen mit 2 bis 6 C-Atomen je Alkylenoxid-Gruppe.

Dabei ist es besonders bevorzugt, wenn die Polyalkylenoxid-Gruppen aufweisende Verbindung mindestens eine terminale Gruppe ausgewählt aus Hydroxy-Gruppen, Alkyl-Gruppen, Alkoxy-Gruppen, Alkenyl-Gruppen, Alkenyloxid-Gruppen, Carbonsäure-Gruppen, Carbonsäureester-Gruppen, Carbonsäureamid-Gruppen, aromatischen-Gruppen und/oder Gruppen enthaltend cyclische-Ether aufweist.

Bevorzugte Polyaklylenoxid-Gruppen, insbesondere umfassend Polyalkylenoxid-Gruppen, aufweisende Verbindungen können vorzugsweise ein Molekulargewicht von 200 g/mol bis 35.000 g/mol, bevorzugt 200 bis 1500 g/mol aufweisen. Dabei ist es weiter bevorzugt, wenn das mittlere Molekulargewicht von 200 g/mol bis 1500 g/mol beträgt.

Besonders bevorzugt sind lineare oder verzweigte Polyalkylenoxid-Gruppen aufweisende Verbindung mit mindestens drei bis 200 Alkylenoxid-Gruppen in der Verbindung oder Gemische von mindestens zwei dieser Verbindungen, insbesondere mit 3 bis 100 Alkylenoxid-Gruppen, besonders bevorzugt mit drei bis 100 Alkylenoxid-Gruppen, weiter bevorzugt mit 3 bis 50 Alkylenoxid-Gruppen, vorzugsweise mit 3 bis 25 Alkylenoxid-Gruppen. Dabei ist es weiter bevorzugt, wenn die Alkylenoxid-Gruppen aus Ethylenoxid und Propylenoxid ausgewählt sind.

Bevorzugt umfasst die Elektrolytzusammensetzung mindestens ein Alkalihydroxid ausgewählt aus NaOH und KOH und optional weitere alkalische lösliche Salze, wie beispielsweise Erdalkalihydroxide, basische Metalloxide oder organische Basen. Bevorzugt umfasst die Elektrolytzusammensetzung ein Alkalihydroxid ausgewählt aus Kaliumhydroxid (KOH) und Natriumhydroxid (NaOH).

Dabei kann es in einer Alternative bevorzugt sein, wenn der Elektrolyt keine linearen Polyalkylenoxid-Gruppen aufweisende Verbindungen mit mindestens zwei terminalen Carbonsäure-Gruppen aufweist.

Dabei können die Alkyl-Gruppen, Alkoxy-Gruppen, Alkenyl-Gruppen, Alkenyloxid-Gruppen, Carbonsäureester-Gruppen, insbesondere olefinischen Carbonsäureester-Gruppen, bevorzugt Fettsäuren, aromatischen-Gruppen, insbesondere Alkyl-substituierten aromatischen Gruppen, und/oder Gruppen enthaltend cyclische-Ether als mindestens eine terminale Gruppe und als mindestens eine weitere terminale Gruppe jeweils unabhängig umfassen 1 bis 35 C-Atome, insbesondere 2 bis 25 C-Atome. Alkyl-, Alkoxy-, Alkenyl-, Alkenyloxid und aromatische Gruppen optional Alkyl-substituiert umfassen vorzugsweise jeweils unabhängig 1 bis 18 C-Atome. Carbonsäureester sind vorzugsweise ausgewählt aus natürlichen Fettsäuren mit 4 bis 20 C-Atomen.

Nach einer Ausführungsform können die Alkylenoxid-Gruppen in der Polyalkylenoxid-Gruppen aufweisenden Verbindung bevorzugt ausgewählt sein aus Alkylenoxid-Gruppen mit 2 bis 4 C-Atomen je Alkylenoxid-Gruppe. Des Weiteren ist es bevorzugt, wenn die Polyalkylenoxid-Gruppen aufweisenden Verbindungen mindestens fünf Alkylenoxid-Gruppen, insbesondere bis einhundert Alkylenoxid-Gruppen, mit 2 bis 4 C-Atomen je Alkylenoxid-Gruppe in der Verbindung aufweist.

Alkylen ist besonders bevorzugt bivalentes Ethylen (-CH₂CH₂-), insbesondere als Ethylenoxid-Gruppe, oder bivalentes Propylen, insbesondere in Propylenoxid-Gruppen (-CH2(CH3CH)- und -(CH₂)₃-).

Bevorzugte Beispiele von Polyalkylenoxid-Gruppen aufweisenden Verbindungen können symmetrische Verbindungen umfassen. Sie sind jedoch nicht beschränkt auf die nachfolgend genannten Polyalkylenoxid-Gruppen aufweisenden Verbindungen: H-(O-Alkylen)ₙ-OH, Alkyl-(O-Alkylen)ₙ-O-Alkyl, Alkenyl-(O-Alkylen)ₙ-O-Alkenyl, Alkyl-(C=O)-(O-Alkylen)ₙ-O-(C=O)-Alkyl, HO-(C=O)-(Alkylen-O-Alkylen)ₙ-(C=O)-OH, Alkyl-O-(C=O)-(-Alkylen-O-Alkylen)ₙ-(C=O)-O-Alkyl, Alkenyl-(C=O)-(O-Alkylen)ₙ-O-(C=O)-Alkenyl, Alkyl-Aromat-(O-Alkylen)ₙ-O-(C=O)-Aromat-Alkyl, wobei n wie vorstehend definiert ist, vorzugsweise ist n größer gleich 2, bevorzugt ist n = 5 bis 50, insbesondere n = 5 bis 25, wobei jedes Alkylen jeweils unabhängig 2 bis 6 C-Atome umfasst und Alkyl und/oder Alkenyl jeweils unabhängig 1 bis 24 C-Atome umfassen, insbesondere 1 bis 20 C-Atome.

Bevorzugt sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, insbesondere olefinische Carbonsäureester-Gruppen, aromatischen-Gruppen und/oder Gruppen enthaltend cyclische-Ether. Eine bevorzugte Verbindung umfasst Polyalkylenoxide von Rapsölamid, besonders bevorzugt ist PEG-4-Rapsölamid.

Nach einer bevorzugten Ausführungsform ist die mindestens eine terminale Gruppe der Polyalkylenoxid-Gruppen aufweisenden Verbindung ausgewählt aus Hydroxy-Gruppe, Carbonsäure-Gruppe, Carbonsäureester-Gruppe, Carbonsäureamid-Gruppe, insbesondere aus Hydroxy- und Carbonsäureamid-Gruppe, und die mindestens eine weitere terminale Gruppe ist ausgewählt aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-substituierten aromatischen Gruppen, und/oder Gruppen enthaltend cyclische-Ether. Dabei ist es weiter bevorzugt, wenn die linearen Verbindungen eine erste terminale und eine weitere terminale Gruppe aufweisen und verzweigte Verbindungen eine erste, eine weitere terminale Gruppe und mindestens eine zusätzliche terminale Gruppe aufweisen.

Nach einer besonders bevorzugten Ausführungsform können die Elektrolytzusammensetzungen umfassen mindestens eine Polyalkylenoxid-Gruppen aufweisende Verbindung mit mindestens einer cyclischen Ether-Gruppe mit 5 bis 8 C-Atomen und optional als mindestens eine terminale Gruppe einen Carbonsäureester, insbesondere einen Carbonsäureester einer Fettsäure, und, wobei die mindestens eine oder mehrere weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäure-Gruppe, Carbonsäureester-Gruppen, Carbonsäureamid-Gruppen, aromatischen-Gruppen und/oder Gruppen enthaltend cyclische-Ether mit 5 bis 8 C-Atomen. Besonders bevorzugt ist eine verzweigte Polyalkylenoxid-Gruppen aufweisende Verbindung mit ein bis sechs Polyalkylenoxid-Gruppen an der cyclischen Ether-Gruppe, und mindestens einem Alkylenoxid-funktionalisierten Fettsäureester. Typische Fettsäuren umfassen Ölsäure, Laurinsäure, Stearinsäure, Isostearinsäure und/oder Palmitinsäure. Besonders bevorzugte Verbindungen umfassen ethoxylierste Sorbitanfettsäureester, insbesondere Mono- bis Triester. Bevorzugt mit 2 bis 200 Ethoxy-Gruppen, insbesondere mit 2 bis 50 Ethoxy-Gruppen, und optional mit Propoxy-Gruppe(n) als Polyalkylenoxid-Gruppen.

Nach einer weiteren bevorzugten Ausführungsform kann eine wässrige, alkalische Elektrolytzusammensetzung verzweigte Polyalkylenoxid-Gruppen aufweisende Verbindungen aufweisen, die umfassen Ether von Kohlenhydraten, insbesondere Ether von Furanosen oder Pyranosen, die optional Carbonsäureester von Fettsäure aufweisen. Besonders bevorzugt sind Polyalkylenoxid-Gruppen enthaltende Verbindungen von Sorbitan-Fettsäureester, wie Polyoxyethylen(20)sorbitanmonooleat (Tween 80). Gleichfalls geeignet können eine oder mehrere der folgenden Polysorbate in der Elektrolytzusammensetzung eingesetzt werden: Polysorbat 20 (Polyoxyethylen-(20)-sorbitanmonolaurat) (E 432), Polysorbat 21 (Polyoxyethylen-(4)-sorbitanmonolaurat), Polysorbat 40 (Polyoxyethylen-(20)-sorbitanmonopalmitat) (E 434), Polysorbat 60 (Polyoxyethylen-(20)-sorbitanmonostearat) (E 435), Polysorbat 61 (Polyoxyethylen-(4)-sorbitanmonostearat), Polysorbat 65 (Polyoxyethylen-(20)-sorbitantristearat) (E 436), Polysorbat 80 (Polyoxyethylen-(20)-sorbitanmonooleat) (E 433), Polysorbat 81 (Polyoxyethylen-(5)-sorbitanmonooleat), Polysorbat 85 (Polyoxyethylen-(20)-sorbitantrioleat), Polysorbat 120 (Polyoxyethylen-(20)-sorbitanmonoisostearat).

Besonders bevorzugte Elektrolytzusammensetzungen können umfassen Polyalkylenoxid-Gruppen aufweisende Verbindungen, die ausgewählt sind aus Polyethylenglycol, Polypropylenglycol, Propylenoxid und Ethylenoxid aufweisenden Polyalkylenoxid-Gruppen enthaltenden Verbindungen, wobei die terminalen Gruppen, insbesondere die mindestens eine oder mehrere weiteren terminalen Gruppen, ausgewählt sind aus Hydroxy-Gruppen, Alkoxy-Gruppen, Alkyl-Gruppen, Alkenyl-Gruppen, Alkenyloxid-Gruppen, Alkyl-funktionellen Carbonsäureester-Gruppen, Alkylenfunktionellen Carbonsäure-Gruppen, wobei die Alkoxy, Alkyl und Alkylen-Gruppen jeweils unabhängig 1 bis 24 C-Atome aufweisen.

Weitere besonders bevorzugte Polyalkylenoxid-Gruppen aufweisende Verbindungen können ausgewählt sein aus Verbindungen enthaltend Polyalkylenoxid-Gruppen aufweisende Furanosen, und/oder Polyalkylenoxid-Gruppen aufweisende Pyranosen, insbesondere Polyalkylenoxid-Gruppen aufweisende Verbindungen von Furanose-Fettsäureestern und/oder Polyalkylenoxid-Gruppen aufweisende Verbindungen von Pyranose-Fettsäureestern. Insbesondere sind die terminalen Gruppen der Polyalkylenoxid-Gruppen aufweisenden Verbindung ausgewählt aus Hydroxy-Gruppen, Alkyl-Gruppen, Alkoxy-Gruppen, Alkylen-Gruppen, Alkylenoxid-Gruppen, Carbonsäureester-Gruppen, aromatischen-Gruppen und/oder Gruppen enthaltend cyclische-Ether.

Weiter bevorzugt sind Polyalkylenoxid-Gruppen aufweisende Verbindungen von Sorbitan-Fettsäureester umfassend Polyalkylenoxid-Gruppen aufweisende Verbindungen eines Sorbitanmonostearats, Sorbitantristearats, Sorbitanmonolaurats, Sorbitanmonooleats, Sorbitantrioleats und/oder Sorbitanmonopalmitats.

Entsprechend einer weiteren Ausführungsform ist es bevorzugt, wenn die Polyalkylenoxid-Gruppen aufweisende Verbindung umfasst mindestens eine cyclische Ether-Gruppe mit 5 bis 8 C-Atomen und optional als mindestens eine terminale Gruppe einen Carbonsäureester, insbesondere einer Fettsäure oder einer Fruchtsäure, bevorzugt einer Fettsäure, und, wobei die weiteren terminalen Gruppen ausgewählt sind aus Hydroxy-Gruppen, Alkyl-Gruppen, Alkoxy-Gruppen, Alkenyl-Gruppen, Alkenyloxid-Gruppen, Carbonsäureester-Gruppen, aromatischen-Gruppen, insbesondere Alkyl-funktionalisierte Phenyl-Gruppen, jeweils unabhängig mit 2 bis 30 C-Atomen.

Eine besonders bevorzugte Verbindung ist ausgewählt aus Polyalkylenoxid-Gruppen aufweisende Verbindungen eines Rapsölamid,insbesondere PEG-4-Rapsöl, 4-(1,1,3,3-Tetramethyl-butyl)phenyl-polyethylen glycolen, bevorzugt 4-(1,1,3,3-Tetramethylbutyl)phenyl-polyethylene glycol, *t-*Octylphenoxypolyethoxyethanol, Polyethylene glycol *tert*-octylphenyl ether, mit n gleich 5 bis 100, bevorzugt mit n = 9 bis 10 (Triton X-100) oder n = 7 bis 8 (Triton X-114).

Somit umfasst der Elektrolyt bevorzugt eine lineare oder verzweigten Polyalkylenoxid-Gruppen aufweisende Verbindung umfassend mindestens eine Carbonsäureester-Gruppe einer Fettsäure, Glyceryl-Fettsäuren, insbesondere Glyceryl-Oleate, Glyceryl-Caprylate, Glyceryl-Linoleate, Glyceryl-Stearate, Glyceryl-Palmitate, Öl-Amide, wie Polyalkylenoxide eines Rapsölamids, Ether von Kohlenhydraten, insbesondere Ether von Furanosen oder Pyranosen, die optional Carbonsäureester von Fettsäure und Gemische umfassend mindestens zwei der genannten Verbindungen, besonders bevorzugt sind Polyalkylenoxid-Gruppen aufweisende Verbindung umfassen mindestens eine Carbonsäureester-Gruppe einer Fettsäure, Glyceryl-Fettsäuren, insbesondere Glyceryl-Oleate, Glyceryl-Caprylate, Glyceryl-Linoleate, Glyceryl-Stearate, Glyceryl-Palmitate, Polyalkylenoxid-Gruppen aufweisende Verbindung umfassend Aminde von Glyceryl-Fettsäuren, insbesondere Rapsölamid, und Gemische umfassend mindestens zwei davon. Als Rapsöl gilt u.a. ein Öl zur Herstellung der Polyalkylenoxid-Gruppen enthaltenden Verbindung basierend auf Ölsäure, Linolsäure, Linolensäure, Palmitinsäure und optional Stearinsäure, Erucansäure, Gadoleinsäure, Gondosäure, Gadoleinsäure, und/oder Nervonsäure sowie Gemische umfassend mindestens zwei der Fettsäuren.

Ebenso Gegenstand der Erfindung ist eine Elektrolytzusammensetzung umfassend 2,0 bis 99,0 Gew.-% Wasser und 0,0001 bis 15 Gew.-% Polyalkylenoxid-Gruppen aufweisende Verbindungen oder Gemische dieser, vorzugsweise Rapsölamid, insbesondere 0,01 bis 10 Gew.-%, bevorzugt 0,01 bis 5 Gew.-%, besonders bevorzugt 0,05 bis 2 Gew.-% und einen Gehalt von 0,001 bis 40 Gew.-% Alkalihydroxid, insbesondere 10 bis 40 Gew.-%, in Bezug auf die Gesamtzusammensetzung von 100 Gew.-%. Optional kann die Elektrolytzusammensetzung Alkalisilikat enthalten, wobei der Gehalt vorzugsweise unter 4 Mol/Liter Alkalisilikat, bevorzugt von 0,001 bis 3,5 Mol/Liter Alkalisilikat beträgt, insbesondere in der Gesamtzusammensetzung von 100 Gew.-%.

Zur Herstellung der wässrigen Elektrolytzusammensetzung wird vorzugsweise destilliertes Wasser eingesetzt. Das Wasser zur Herstellung der Elektrolytzusammensetzung weist vorzugsweise bei 25 °C, eine Leitfähigkeit von größer gleich 0,055 µS/cm, weiter bevorzugt von größer gleich 0,5 µS/cm auf. In der Elektrolytzusammensetzung ist die Leitfähigkeit erheblich höher und liegt vorzugsweise bei größer gleich 1 mS/cm bei 25 °C, bevorzugt bei größer gleich 0,5 S/cm bei 25 °C.

Nach einer besonders bevorzugten Ausführungsform ist die Elektrolytzusammensetzung eine wässrige, alkalische Zusammensetzung umfassend Alkalihydroxid, insbesondere Kaliumhydroxid, und
mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen. Dabei ist es bevorzugt, wenn der Gehalt des Alkalihydroxids von 0,001 bis 6 Mol/Liter, vorzugsweise von 1 bis 5,5 Mol/Liter in der wässrigen, alkalischen Elektrolytzusammensetzung beträgt.

Der Gehalt an Polyalkylenoxid-Gruppen aufweisenden Verbindung kann von der gewählten Elektrodenoberfläche sowie weiteren Verfahrensbedingungen wie Temperatur, Durchflussmenge in der Zelle, Porengröße der Elektrodenoberfläche etc. abhängen. Daher kann der Gehalt an Polyalkylenoxid-Gruppen aufweisende Verbindung von 0,000001 bis 50.000 ppm-Gew., insbesondere von 0,01 bis 20.000 ppm-Gew., bevorzugt von 0,01 ppm-Gew. bis 10.000 ppm-Gew., in der Elektrolytzusammensetzung, insbesondere mit einer Gesamtzusammensetzung von 100 Gew.-% betragen. Bevorzugt ist der Gehalt an Polyalkylenoxid-Gruppen aufweisende Verbindung in der Elektrolytzusammensetzung von 100 ppm-Gew. bis 8000 ppm-Gew., besonders bevorzugt sind 200 ppm.-Gew. bis 6000 ppm-Gew., vorzugsweise 400 ppm-Gew. bis 4000 ppm-Gew.

Weiter ist es bevorzugt, wenn die Elektrolytzusammensetzung eine Stoffmengenkonzentration von 1 bis 6 Mol/Liter Alkalihydroxid, insbesondere Kaliumhydroxid, und 10 ppm-Gew. bis 50.000 ppm-Gew. lineare oder verzweigte Polyalkylenoxid-Gruppen aufweisende Verbindungen mit mindestens drei Alkylenoxid-Gruppen in der Verbindung oder Gemische von mindestens zwei dieser Verbindungen in Wasser aufweist, wobei insbesondere die Gesamtzusammensetzung der Elektrolytzusammensetzung 100 Gew.-% beträgt. Bevorzugt ist die Polyalkylenoxid-Gruppen enthaltende Verbindung ausgewählt aus Polyethylenoxid-Gruppen, Polypropylenoxid-Gruppen, Polypropylenoxid- und Polyethylenoxid-Gruppen enthaltenden Verbindungen. In einer Alternative weist die Polyalkylenoxid-Gruppen aufweisende Verbindung mindestens einen cyclischen Ether auf.

Gleichfalls Gegenstand der Erfindung ist eine chemische Primärzelle aufweisend eine Anode, eine Kathode, einen Elektrolyten sowie mindestens einen Separator, wobei der Separator die Kathode und die Anode voneinander separiert, und die Kathode umfasst als Material Manganoxid vorzugsweise umfassend Mangandioxid und optional Kohlenstoff enthaltenden Leitfähigkeitsvermittler, wobei die Anode als Anodenmaterial Silizium umfasst, und wobei das Silizium in Form von Silizium-Partikeln vorliegt. Die Silizium-Primärpartikel weisen vorzugsweise eine Partikelgröße zwischen 1 nm bis 3000 nm auf. Nach einer Alternative sind die Siliziumpartikel kristallin, insbesondere sind die Siliziumpartikel polykristallin. Nach einer weiteren Alternative sind die Siliziumpartikel im Wesentlichen röntgenamorph. Ferner können Gemische von Siliziumpartikeln umfassend amorphe und kristalline Siliziumpartikel als Anodenmaterial eingesetzt werden.

Bevorzugte Kathoden umfassen Kathoden, bei denen i) das Material der Kathode der Primärzelle Mangandioxid und optional einen Kohlenstoff enthaltenden Leitfähigkeitsvermittler aufweist, wobei die Primärzelle in einem hermetisch abgeschlossen Gehäuse vorliegt, oder ii) die Kathode der Primärzelle eine Luftkathode ist und das Material der Kathode der Primärzelle Manganoxid, insbesondere Manganoxid und/oder Mangandioxid, Platin, Platin-Basis, Silber einzeln oder gemeinsam als Katalysator umfasst und optional einen Kohlenstoff enthaltenden Leitfähigkeitsvermittler aufweist, insbesondere weist die Luftkathode eine für Kohlendioxid undurchlässige Membran auf.

Nach einer bevorzugten Ausführungsform kann die Primärzelle mit einem hermetisch abgeschlossenen Gehäuse vorliegen, wobei i) das Material der Kathode der Primärzelle Mangandioxid und optional einen Kohlenstoff enthaltenden Leitfähigkeitsvermittler aufweist. Als ein hermetisch abgeschlossenes Gehäuse wird in der Regel ein Gehäuse verstanden, dass aus einem gegenüber alkalischen Elektrolyten inertem Material hergestellt ist und hermetisch, insbesondere fluiddicht (gas- und flüssigkeitsdicht) abgeschlossen ist. Als Material für das Gehäuse oder auch für den Separator kommen beispielsweise Polyetheretherketone, Polyaryletherketone, Polyphenylensulfid (PPS), Polyoxymethylen-Copolymere(POM-C), Polyamid, Cycloolefine oder andere High-performance Kunststoffe oder auch metallische Legierungen in Frage. Die Komponenten des Gehäuses können mittels Laser verschweißt oder mittels Plasmaverfahren verschweißt sein.

Die Kathode kann als Kohlenstoff geträgertes MnO₂ ausgeführt sein.

Der Separator kann mit einer Shut-down-Funktion ausgelegt sein, um einen Zutritt des Elektrolyten bei unerwünschten Verfahrensbedingungen von der Anode und/oder der Kathode zu unterbinden. Gleichfalls kann die Primärzelle eine Berstplatte aufweisen, um bei unerwünschtem Druckanstieg eine Explosion der Primärzelle zu vermeiden und den gezielten Austritt der Komponeten aus der Primärzelle bei Druckanstieg zu steuern.

Nach einer zweiten Alternative kann die Primärzelle als die Kathode ii) eine Luftkathode aufweisen. Das Material der Kathode in dieser Primärzelle umfasst vorzugsweise Mangandioxid und optional einen Kohlenstoff enthaltenden Leitfähigkeitsvermittler, insbesondere weist die Luftkathode eine für Kohlendioxid-undurchlässige Membran auf, die vorzugsweise in der Primärzelle so angeordnet ist, dass sie den Zutritt von Kohlendioxid aus der Umgebungsluft an die Kathode verhindert.

Ferner ist Gegenstand der Erfindung eine Primärzelle in der die Anode als Anodenmaterial Silizium umfasst, insbesondere wobei das Silizium in Form von Silizium-Partikeln vorliegt, und bevorzugt die Silizium-Primärpartikel eine Partikelgröße zwischen 1 nm bis 3000 nm aufweisen. Die Siliziumpartikel können ausgewählt sein aus kristallinen, insbesondere polykristallin, und/oder amorphen Siliziumpartikeln. Nach einer bevorzugten Ausführungsform können Sägereste aus der Silizium-Waferherstellung, wie Wafern zur Herstellung von Halbleiter oder auch Reste aus der Herstellung von Solarsilizium-Wafern eingesetzt werden. XRD-Analysen der polykristallinen Siliziumpartikel unter Verwendung der Scherrer-Gleichung ergeben sich Kristallitgrößen größer gleich von 12 nm. Alternativ sind die Silizium-Primärpartikel im Wesentlichen amorph.

Vorzugsweise können die Silizium-Partikel in Form von Agglomeraten von Silizium-Primärpartikeln, Aggregaten von Silizium-Primärpartikeln oder Gemischen dieser Agglomerate und Aggregate, wobei die Agglomerate und/oder Aggregate eine Größe von 100 bis 3000 nm aufweisen. Die Primärpartikel können Partikel mit einer Primärpartikelgröße von 10 bis 90 nm aufweisen.

Ferner ist Gegenstand der Erfindung eine mehrzellige Batterie, wobei die Batterie mindestens zwei bis 15.000 mit einander verbundene Primärzellen umfasst, vorzugsweise sind die zwei bis 15.000 miteinander verbundenen Primärzellen in Serie geschaltet.

Gleichfalls Gegenstand der Erfindung ist eine mehrzellige Batterie und ein System umfassend mindestens eine mehrzellige Batterie, wobei die mehrzellige Batterie mindestens zwei bis 15.000 mit einander verbundene Primärzellen umfasst, vorzugsweise sind die zwei bis 15.000 mit einander verbundenen Primärzellen in Serie geschaltet.

Ferner wird ein System zur Datenverarbeitung umfassend Mittel zur Ausführung eines Verfahrens für den Betrieb einer Primärzelle oder eines Systems oder einer mehrzelligen Batterie beansprucht. Vorzugsweise umfasst das Verfahren des Systems zur Datenverarbeitung ein Verfahren für den Betrieb des Systems, wobei das Verfahren umfasst mindestens einen Verfahrensschritt in dem ein Elektrolytmanagement erfolgt, das umfasst i) Zuführung und/oder Entfernung des Elektrolyten in mindestens einer Primärzelle, und/oder ii) Einstellen der Temperatur des Elektrolyten in mindestens einer Primärzelle, insbesondere des Elektrolyten in den Primärzellen (der Batterie) auf eine definierte Temperatur, insbesondere auf eine Temperatur größer gleich 26 °C, insbesondere ist das Verfahren ein computerimplementiertes Verfahren (ein von einem Computer ausgeführtes Verfahren). Bevorzugt umfasst das Verfahren zudem iii) einen Schritt des Zuführens und/oder Entfernens des Elektrolyten, indem nach dem Entfernen des Elektrolyten ein Zuführen einer wässrigen Zusammensetzung für einen Betrieb in Leerlaufspannung der Primärzelle erfolgt, insbesondere umfasst die wässrige Zusammensetzung Polyalkylenoxid-Gruppen aufweisende Verbindungen.

Ferner kann das Verfahren umfassen: a) Entladeschritt mit i) Zuführen oder Vorhandensein von Elektrolyt in der mindestens einen Primärzelle, wobei das Zuführen erfolgt aus einem ersten Reservoir mittels Elektrolytzuführeinheit, ii) Entladen der mindestens einen Primärzelle, b) Betrieb der mindestens einen Primärzelle in Leerlaufspannung, i) Entfernen des Elektrolyten aus der mindestens einen Primärzelle, und ii) Zuführen der wässrigen Zusammensetzung aus einem zweiten Reservoir in die mindestens eine Primärzelle,
iii) Entfernen der wässrigen Zusammensetzung aus der Primärzelle, insbesondere in das zweite Reservoir, wobei die Schritte b) ii) und iii) kumulativ erfolgen oder ausgelassen werden, und optional erfolgt in b) ii) ein Einstellen der Temperatur der wässrigen Zusammensetzung, wobei die Schritte a) Entladeschritt und b) Betrieb in Leerlaufspannung abwechselnd nacheinander durchgeführt werden und vorzugsweise wiederholt nacheinander durchgeführt werden.

Gleichfalls Gegenstand der Erfindung ist eine Computerprogrammprodukt, umfassend Befehle, die bei der Ausführung des Programms durch einen Computer diesen veranlasst, das Verfahren für den Betrieb einer Primärzelle oder für den Betrieb eines Systems auszuführen.

Ferner ist Gegenstand der Erfindung ein Computer lesbares Medium, umfassend Befehle, die bei der Ausführung durch einen Computer diesen veranlassen, das Verfahren auszuführen und/oder das Verfahren nach einem der Ansprüche für den Betrieb einer mehrzelligen Batterie oder eines Systems umfassend eine mehrzellige Batterie auszuführen.

Überraschenderweise haben die Erfinder gefunden, dass spezifische Silizium-Partikel als aktive Komponente in einer galvanischen Zelle verwendet werden können und in einer einzelnen spezifischen elektrochemischen Primärzelle nennenswerte Leistungsdichten bis unerwartet hohe Leistungsdichten von größer gleich 0,5 mW/cm² erzielt werden können. In allen Versuchen konnte mit Elektroruß oder elektrochemisch behandeltem bzw. hergestelltem Ruß und Leitruß die besten Leistungsdichten für Silizium enthaltende Primärzellen mit größer 3 mW/cm² erhalten werden.

Ein wichtiger Schlüsselprozess bei der Herstellung der Siliziumscheiben für die Halbleiterindustrie und für die Photovoltaik-Industrie ist das Drahtsägen, in dem Bricks als Ausgangsmaterial genutzt werden. Beim Drahtsägeverfahren wird dabei zum überwiegenden Teil mit Metalldrähten und einer Siliziumcarbid-Suspension (Slurry), typischerweise basierend auf Siliziumcarbid (eg. SiC F600) und Polyethylenglykol (PEG200), gesägt.

Aus Solarsilizium werden Silizium-Ingots produziert, aus denen nachfolgend dünne Siliziumscheiben, die sogenannten Wafer, gesägt werden. Die Herstellung der Wafer mit Dicken von ca. 200 µm erfolgt mit einem speziellen Drahtsägeverfahren (MWS: multi-wire slurry sawing). Während dieses Fertigungsschrittes gehen ca. 45 % des hochreinen Siliziums als feinste Sägespäne (Partikelgröße < 5 µm) verloren.

Die Silizium-Partikel des Anodenmaterial können somit umfassen Siliziumpartikel, insbesondere polykristalline Silizium-Partikel und/oder amorphe Silizium-Partikel, einer Partikelgröße im Bereich von 0,1 µm bis 20 µm, insbesondere im Bereich von 0,1 µm bis kleiner 5 µm, sowie Kohlenstoff und Silizium enthaltende Partikel, die insbesondere eine Partikelgröße im Bereich von 0,1 µm bis 20 µm, insbesondere im Bereich von 0,1 µm bis kleiner 5 µm aufweisen, und optional Partikel mindestens einer allotropen Kohlenstoffmodifikation, die insbesondere eine Partikelgröße im Bereich von 0,1 µm bis 20 µm, insbesondere im Bereich von 0,1 µm bis kleiner 5 µm, aufweisen, und optional Eisen enthaltende Partikel, wie Edelstahlpartikel, wobei das Anodenmaterial einen Gehalt an Eisen von größer gleich 0,02 mg/kg, insbesondere größer gleich 0,05 mg/kg, aufweist. Besonders bevorzugt weist das Anodenmaterial eine Gesamtzusammensetzung an partikulären Feststoffen auf, umfassend Silizium enthaltende Partikel, Kohlenstoff und Silizium enthaltende Partikel, Partikel mindestens einer allotropen Kohlenstoffmodifikation und Eisen enthaltenden Partikel, wobei der Gehalt an Eisen in der Gesamtzusammensetzung an partikulären Feststoffen größer gleich 0,05 mg/kg beträgt.

Entsprechend einer besonders bevorzugten Ausführungsform der Erfindung wird ein Silizium enthaltendes Anodenmaterial beansprucht, umfassend Siliziumpartikel einer Partikelgröße im Bereich von 0,1 µm bis kleiner 5 µm, sowie Kohlenstoff und Silizium enthaltende Partikel einer Partikelgröße im Bereich von 0,1 µm bis kleiner 5 µm und optional Partikel mindestens einer allotropen Kohlenstoffmodifikation, insbesondere Diamant, einer Partikelgröße im Bereich von 0,1 µm bis kleiner 5 µm, wobei das Anodenmaterial, insbesondere in Bezug auf die partikulären Feststoffe, einen Gehalt an Eisen von größer gleich 0,02 mg/kg, bevorzugt größer gleich 0,05 mg/kg aufweist.

Nach einer bevorzugten Alternative weisen die Siliziumpartikel einen Gehalt an Eisen von größer gleich 0,02 mg/kg, insbesondere größer gleich 0,05 mg/kg, auf und/oder das Anodenmaterial weist Eisen enthaltende Partikel mit einem Gehalt von größer gleich 80 Gew.-% Eisen in Bezug auf die Gesamtzusammensetzung der Eisen enthaltenden Partikel von 100 Gew.% auf, wobei die Eisen enthaltenden Partikel vorzugsweise Edelstahlpartikel sind.

Nach einer bevorzugten Ausführungsform weisen im Anodenmaterial i) die Siliziumpartikel einen Gehalt an Eisen von größer gleich 0,02 mg/kg auf, bevorzugt größer gleich 0,05 mg/kg, und/oder das Anodenmaterial umfasst ii) Eisen enthaltende Partikel mit einem Gehalt an Eisen von größer gleich 90 Gew.-% in Bezug auf die Eisen enthaltenden Partikel mit einem Gehalt von 100 Gew.-%, wobei die Eisen enthaltenden Partikel vorzugsweise eine Edelstahllegierung umfassen. Typische geeignete Edelstahllegierungen umfassen: WNr. 1.4301 (X5CrNi18-10), AISI 304, (V2A), SUS304; WNr. 1.4306 (X2CrNi19-11), AISI 304L; WNr. 1.4307 (X2CrNi18-9), AISI 304L, (V2A); WNr. 1.4429 (X2CrNiMoN17-13-3), AISI 316LN; WNr. 1.4541 (X6CrNiTi18-10), AISI 321, (V2A); WNr. 1.4562 (X1NiCrMoCu32-28-7). Die Korrosionsbeständigkeit wird durch das Elektropolieren wesentlich erhöht. So können die Edelstahllegierungen die Elemente umfassen Molybdän (Mo), Vanadium (V), Kobalt (Co), Chrom (Cr), Titan (Ti), Nickel (Ni) und/oder Aluminium (AI). Daher weist die Edelstahllegierung vorzugsweise einen Gehalt von größer gleich 0,0001 mg/kg, insbesondere größer gleich 0,01 mg/kg mindestens eines der nachfolgenden genannten Metalle ausgewählt aus Mo, V, Co, Cr, Ti, Ni und Al auf. Bevorzugt umfassen die Metalle i) Mo, V und Co, ii) Cr, Mo und V oder iii) Ti, Cr, Ni und Al.

Nach einer weiteren Ausführungsform ist ein Anodenmaterial bevorzugt, dass einen Gehalt aufweist an Eisen größer gleich 0,05 mg/kg, Aluminium größer gleich 0,01 mg/kg, Kohlenstoff größer gleich 0,01 mg/kg, Calcium größer gleich 0,01 mg/kg, und optional Titan größer gleich 0,001 mg/kg, und optional Kupfer größer gleich 0,001 mg/kg. Ferner ist ein Anodenmaterial bevorzugt, dass einen Gehalt aufweist an Eisen größer gleich 5 mg/kg, Aluminium größer gleich 0,5 mg/kg, Calcium größer gleich 5 mg/kg, und optional Titan größer gleich 0,01 mg/kg, und optional Kupfer größer gleich 0,05 mg/kg.

Dabei ist es bevorzugt, wenn das Anodenmaterial in der Gesamtzusammensetzung umfassend Siliziumpartikel sowie Kohlenstoff und Silizium enthaltende Partikel, insbesondere Siliciumcarbid enthaltende Partikel, und optional Partikel mindestens einer allotropen Kohlenstoffmodifikation, vorzugsweise Diamant, und optional Eisen enthaltende Partikel, insbesondere Edelstahl enthaltende Partikel, und optional Siliziumdioxid enthaltende Partikel, einen Eisengehalt von größer gleich 50 mg/kg, insbesondere von 50 bis 85 mg/kg Anodenmaterial, aufweist. Besonders bevorzugt liegen im Wesentlichen Diamant und Eisen enthaltende Partikel teilweise als eine Einheit vor.

Ferner ist ein Anodenmaterial bevorzugt, das in der Gesamtzusammensetzung umfasst
30 bis 93,5 Gew.-% Siliziumpartikel,
1 bis 65 Gew.-% Kohlenstoff und Silizium enthaltende Partikel, insbesondere Siliciumcarbid,
0 bis 10 Gew.-% Partikel mindestens einer allotropen Kohlenstoffmodifikation, insbesondere Diamant,
1 bis 10 Gew.-% Siliziumdioxid, insbesondere Siliziumdioxidpartikel oder Siliziumdioxid als Bestandteil der Siliziumpartikel,
und der Gehalt an Eisen im Anodenmaterial beträgt größer gleich 50 mg/kg, bevorzugt beträgt der Gehalt an Eisen von 50 bis 85 mg/kg und optional weist das Anodenmaterial einen Gehalt an Kupfer von größer gleich 0,1 mg/kg und/oder einen Gehalt an Zink von größer gleich 0,01 mg/kg auf, und wobei die Gesamtzusammensetzung des Anodenmaterials 100 Gew.-% beträgt.

Entsprechend einer besonders bevorzugten Ausführungsform der Erfindung wird ein Silizium enthaltendes Anodenmaterial beansprucht, umfassend Siliziumpartikel einer Partikelgröße im Bereich von 0,1 µm bis kleiner 5 µm, sowie Kohlenstoff und Silizium enthaltende Partikel einer Partikelgröße im Bereich von 0,1 µm bis kleiner 5 µm und optional Partikel mindestens einer allotropen Kohlenstoffmodifikation, insbesondere Diamant, einer Partikelgröße im Bereich von 0,1 µm bis kleiner 5 µm, wobei die Siliziumpartikel einen Gehalt an Eisen von größer gleich 0,02 mg/kg, bevorzugt größer gleich 0,05 mg/kg aufweisen.

Gleichfalls können die Silizium-Partikel umfassen alleine oder im Gemisch mit mono- oder polykristallinen Silizium-Partikeln auch aggregierte und/oder agglomerierte Silizium-Primärpartikeln. Unter Agglomeraten von Silizium werden erfindungsgemäß Silizium-Primärpartikel verstanden, die sich im Wesentlichen an Ecken und Kanten berühren und nicht an den Flächen. Agglomerate können beim Dispergieren in Aggregate und die Silizium-Primärpartikel zerkleinert werden. Des Weiteren werden unter Aggregaten zusammengewachsene, aneinander geschmolzene oder zusammengelagerte Primärpartikel verstanden, die nur unter mechanischer Krafteinwirkung voneinander getrennt werden können.

Des Weiteren soll ein Kathodenmaterial bereitgestellt werden, das vorzugsweise eine physikalische Mischung von Mangandioxid (MnO₂) und einem Leitfähigkeitsvermittler umfasst. Der optionale Gehalt des Leitfähigkeitsvermittlers in den Elektroden der Primärzelle kann in der Kathode und in der Anode unterschiedlich hoch sein. Für Mangandioxid ist ein Gehalt an Leitfähigkeitsvermittler im Material der Kathode von circa 5 bis 65 Gew.-%, bevorzugt 5 bis 15 Gew.-% üblich. Generell kann der Gehalt des Leitfähigkeitsvermittlers von 5 bis 60 Gew.-% im Material der Kathode betragen. Alternativ bevorzugt können Gehalte im Bereich von 15 bis 20 Gew.-% für einen geringeren Widerstand oder auch als Obergrenze 30 bis 60 Gew.-% sein. Dabei beträgt das Material der Kathode in Summe immer 100 Gew.-%.

Als im Wesentlichen amorph gilt ein Pulver, das röntgenamorph ist. Als röntgenamorph gilt vorzugsweise ein Pulver mit einer Kristallinität kleiner 20 %, bevorzugt kleiner 12 %, besonders bevorzugt kleiner gleich 2 %. Der Kristallinitätsgrad kann nach folgender Methode mittels XRPD ermittelt werden über die Formel % Kristallinität = (100 × A)/(A + B -C) mit A = gesamte Peakfläche der Reflexe der kristallinen Bestandteile des Diffraktogramms; B = gesamte Fläche unterhalb der Peakfläche A; C = luftstreuend-, fluoreszierend- und gerätebedingte Untergrundfläche. Gesamte Peakfläche A mit Untergrund genau unterhalb der schmalen Reflexe der Si-Phase. Die Untergrundfläche C wurde anhand der XRD-Diagramme des Si-Referenzstandards NIST 640 (Si-Standard = 100 % Kristallinität) ermittelt. Fläche B entspricht einem eingelegten Untergrundverlauf sowie dem konstanten Untergrund C. Berechnung (HighScore Plus Software). Si-Standard (Standard Reference Material 640d for X-Ray Metrology, David R. Black, Donald Windover, Albert Henins, David Gil, James Filliben and James P. Cline; National Institute of Standards and Technology, Gaithersburg, MD, 20899). In röntgenamorphen Pulvern gibt es im XRPD keine scharfen, sondern nur wenige diffuse Interferenzen bei kleinen Beugungswinkeln. Stoffe mit einem derartigen Röntgenbeugungsdiagramm bezeichnet man als *röntgenamorph.* Kristallin: Kristall ist ein anisotroper, homogener Körper, der eine dreidimensional periodische Anordnung der Bausteine besitzt und ein XRPD mit klar definierten auflösbaren Reflexen besitzt.

Batterieseparatoren in einer Alkali-Batteriezelle werden zum Trennen einer negativen Elektrode von einer positiven Elektrode verwendet, wenn sie in einem geeigneten Elektrolyten angeordnet sind. Neben der Trennung der Elektroden weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, PEEK (Polyetheretherketon), PEAK (Polyetheraryletherketon), PEEK/PEDEK (Polyetheretherketon, Polyetherdiphenyletherketon), Lingnocellulose, Cellulose und/oder Mikrozellulose basieren.

Ferner ist es bevorzugt, dass das Anodenmaterial Silizium-Partikel sowie Leitfähigkeits-vermittler umfasst, insbesondere umfasst der Leitfähigkeitsvermittler Kohlenstoff enthaltende Partikel oder eine Kohlenstoff enthaltende Paste, wie elektrisch leitfähige organische Polymere. Ein besonders bevorzugtes Anodenmaterial der Anode umfasst zu 10 bis 100,00 Gew.-%, insbesondere von 5 bis 90 Gew.-%, bevorzugt von 10 bis 95 Gew.-% Silizium-Partikel und einen Kohlenstoff enthaltenden Leitfähigkeitsvermittler, insbesondere von 5 bis 90 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm.

Bevorzugt ist ebenfalls ein Anodenmaterial der Anode umfassend zu 20 bis 75 Gew.-%, vorzugsweise von 20 bis 60 Gew.-%, Silizium-Partikel und einen Kohlenstoff enthaltenden Leitfähigkeitsvermittler, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-%, d.h. ohne Elektrolyt und/oder getrocknet, beträgt.

Entsprechend zwei alternativen besonders bevorzugten Ausführungsformen umfasst die Kathode der Primärzelle a) als Material Mangandioxid als Kathodenmaterial, oder b) die Kathode der Primärzelle ist eine Luftkathode und die Kathode umfasst Manganoxid, insbesondere Manganoxid und Mangandioxid, Platin, Platin-Basis, Nickel-Kobalt-Cyanide, oder Silber als Katalysator im Kathodenmaterial.

Ein besonders bevorzugtes Kathodenmaterial der Kathode in einer hermetisch geschlossenen Primärzelle umfasst zu 75 bis 85 Gew.-% Mangandioxid und zu 15 bis 25 Gew.-% einen Kohlenstoff enthaltenden Leitfähigkeitsvermittler, wobei die Gesamtzusammensetzung des Kathodenmaterials 100 Gew.-% (Kathodenmaterial ohne Elektrolyt und/oder getrocknet) beträgt.

Der Kohlenstoff enthaltende Leitfähigkeitsvermittler umfasst vorzugsweise Kohlenstoff enthaltende Partikel, besonders bevorzugt Graphen enthaltende Partikel. Die Kohlenstoffpartikel weisen vorzugsweise eine Partikelgrößenverteilung im Bereich von 0,1 nm bis 5 Mikrometer, bevorzugt von 5 nm bis 5 Mikrometer auf. Dabei ist es weiter bevorzugt, wenn die Kohlenstoffpartikel eine Partikelgröße im Bereich von 5 nm bis 300 nm, insbesondere von 10 nm bis 150 nm, besonders bevorzugt von 20 bis 100 nm aufweisen und optional als Agglomerate einer Größe von 100 nm bis 3 Mikrometer, vorzugsweise einer Größe von 300 nm bis 2 Mikrometer vorliegen.

Entsprechend einer bevorzugten Ausführungsvariante umfassen die Silizium-Partikel des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als Elektronen-Donatoren werden Elemente der 15. Hauptgruppe (neue Nomenklatur: Gruppe 15 des Periodensystems) eingesetzt.

Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativ bevorzugten Ausführungsform umfassen die Silizium-Partikel, insbesondere die polykristallinen Partikel, des Anodenmaterials Dotierstoffe, wobei die Dotierstoffe größer gleich 10⁴ Atome (ca. 100 Gew.-ppm, abhängig vom Atomgewicht des Dotierstoffes) der 15. Hauptgruppe auf 10⁶ Silizium-Atome und/oder größer gleich 10⁴ Atome der 13. Hauptgruppe auf 10⁶ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 2 ·10⁴ Atome der 15. Hauptgruppe auf 10⁶ Silizium-Atome größer gleich 2 ·10⁴ Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10⁵ Atome der 15. Hauptgruppe auf 10⁶ Silizium-Atome und/oder größer gleich 10⁵ Atome der 13. Hauptgruppe auf 10⁶ Silizium-Atome betragen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe mit größer gleich 10¹⁹ Atomen/cm³ ausgewählt aus mindestens einem Elektronendonator und Elektronenakzeptor vorliegt. Dabei liegt die Legierung von Silizium auf atomarer Ebene mit mindestens einem Element der 13. oder 15. Hauptgruppe als eine amorphe oder kristalline Phase vor. Besonders bevorzugt weisen die Siliziumpartikel einen Gehalt an Bor von 10 ppm-Gew bis 2,5 Gew.-% in Bezug auf den Gesamtgehalt von 100 Gew.-% des Siliziumpartikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen.

Gegenstand der Erfindung ist eine Primärzelle umfassend Silizium-Partikel, die einen Gehalt an Bor von 10 Gew.-ppm bis 1,8 Gew.-% aufweisen.

Nach einer weiteren Alternative weist die Primärzelle an der Luftkathode einen Lufteinlass auf, der eine Gas durchlässige Membran sein kann. Bevorzugt ist eine Membran aus einem inerten Polymer, bevorzugt aus einem Polyfluorpolyethylen, Polyfluorpolypropylen oder Co-Polymeren davon. Der Aufbau der Luftkathode ist in der Regel eine Sandwichbauweise umfassend eine Gas durchlässige Membran, ein metallisches Netz zur Stromleitung und mindestens einen Katalysator, insbesondere einen porösen Katalysator. Die gasdurchlässige Membran ist vorzugsweise für Kohlendioxid undurchlässig und für Sauerstoff und optional Stickstoff durchlässig.

Amorphes Silizium wird im Elektrolyten isotrop aufgelöst, so dass amorphes Silizium eine höhere Energiedichte liefern kann. Beispielsweise ist im erfindungsgemäßen Elektrolyten die Ätzrate für die (111)-Richtungen eines Siliziumkristalls ungefähr zwei Größenordnungen kleiner als die jeder anderen Richtung. Die (100)-orientierten Flächen des Siliziumkristalls werden anderthalb mal so schnell geätzt wie die (110)-orientierten Flächen. Gleichfalls können dotierte, amorphe Silizium-Partikel eingesetzt werden. Ist die Dotierung von p-Typ Silizium-Partikeln größer als > 10¹⁹ je cm³, wird die Ätzrate herabgesetzt, da gilt, je höher die Dotierrate desto geringer die Ätzrate. Insofern ist über die Dotierung in amorphen Silizium-Partikeln die Leistungsdichte auch über die Ätzrate einstellbar.

Unter amorphen Silizium-Primärpartikeln werden Silizium-Primärpartikel, in der Regel in Form eines Pulvers oder in einer festen Zusammensetzung verstanden, die (Silizium-Primärpartikel) röntgenamorph vorliegen und optional partikulärdispers in eine Hilfsstoffmatrix z.B. Ruß eingebettet sein können. Dabei bedeutet Röntgenamorph, dass dem Röntgensignal" entsprechend den Haupt-Peaks: 28.5° (111) 47.4°(220) 56.0° (311) 69.4° (400) maximal weniger als 10% der Signalamplituden bezogen auf die fcc Struktur des Siliziums (JCPDS card: 00-027-1402) erreichen.

Erfindungsgemäßes Anodenmaterial umfasst keine Silicide. Unter Siliciden werden intermetallische Verbindungen mit einem stöchiometrischen Anteil an mindestens einem zweiten Metall verstanden. Silicide weisen eine homogene chemische Verbindung aus zwei oder mehr Metallen mit Gitterstrukturen, die sich von denen der konstituierenden Metalle unterscheiden, auf. Des Weiteren weist das Anodenmaterial keine klassische Legierung aus mindestens zwei Elementen auf, die gemeinsam das metalltypische Merkmal des kristallinen Aufbaus mit Metallbindung aufweisen, da die Silizium-Partikel vorzugsweise im Wesentlichen amorph (röntgenamorph) sind. Die erfindungsgemäße elektrochemische Primärzelle ist keine Lithium-Ionen Batterie. Des Weiteren umfasst das Anodenmaterial keine Lithium-Interkalationsverbindung. Erfindungsgemäß umfasst das Kathodenmaterial kein Lithium-Metalloxid. Ebenso umfasst die Primärzelle keine Lithium-Salze.

Die erfindungsgemäßen Silizium-Partikel weisen vorzugsweise eine Oberfläche von 0,001 bis 800 m²/g, vorzugsweise von 0,1 bis 300 m²/g, bevorzugt von 0,1 bis 100 m²/g auf, insbesondere von 10 - 100 m²/g, vorzugsweise mit einer Primärpartikelgröße von etwa 10 nm im Mittel mit plus/minus 9 nm. Des Weiteren beträgt vorzugsweise die Oberfläche der Agglomerate und/oder Aggregate von 10 bis 80 m²/g.

Bevorzugt beträgt die Packungsdichte der Siliziumpartikel als Pulverschüttung 10 bis 50 g/l, insbesondere entlüftet um 100 g/l. entlüftet ca. 100g/l. Liegen die Siliziumpartikel als 3D-Formkörper gesintert vor, kann die Packungsdicht von 700 g/l bis 1500 g/l betragen. Bei dichtgesinterten Siliziumpartikeln kann die Packungsdichte von 2 bis 2,3 kg/l betragen.

Liegt Silizium in Form von Folien mit einer Schichtdicke von größer 0,1 Mikrometer vor, ist es weiter bevorzugt, wenn die Silizium-Folie beispielsweise als Bandmaterial angelehnt an technisch vorhandenes Material aus Druckprozessen vorliegt. Die Das Bandmaterial der Folie kann auf Zielformate, wie A5 zugeschnitten werden.

Die Kathode und/oder die Anode weisen vorzugsweise eine Porosität auf, die bestimmt wird über Dichtemessung. Vorzugsweise beträgt die Porosität der Kathode und/oder der Anode von 18 bis 28 Vol.-% in Bezug auf das Gesamtvolumen der Kathode von 100 Vol.-%, bevorzugt von 24 bis 28 Vol.-%, besonders bevorzugt von 25 Vol.-% bis 27 Vol.-%. Die Porosität ist der Zwischenraum in der Anode und/oder der Kathode, der für den fluiden Elektrolyten verfügbar ist. Die Porosität wird ausgedrückt als prozentuales Volumen des freien geometrischen Gesamtvolumens der Kathode oder der Anode. Somit können die über die Porosität gebildeten Zwischenräume teilweise oder vollständig mit Elektrolyt gefüllt sein.

Die Volumendichte des Silizium-Anodenmaterial beträgt zwischen 0,1 bis 2,3 g/cm³.

Nach gleichfalls bevorzugten Alternativen kann das Gewichtsverhältnis von Mangandioxid im Kathodenmaterial zum Elektrolyten von 2,2 bis 2,9 betragen. Alternativ oder gleichzeitig kann das Gewichtsverhältnis der Silizium-Partikel im Anodenmaterial zum Elektrolyt von 0,6 bis 1,7 betragen.

Ein besonders bevorzugtes Kathodenmaterial der Kathode umfasst zu 70 bis 95 Gew.-% als Kathodenmaterial Mangandioxid, insbesondere Battery Grade und bevorzugt einer Partikel-größe von kleiner gleich 10 Mikrometer, und einen Kohlenstoff enthaltenden Leitfähigkeits-vermittler, insbesondere von 5 bis 30 Gew.-% Leitfähigkeitsvermittler, und optional weitere Additive auf 100 Gew.-% des Kathodenmaterials. Der Leitfähigkeitsvermittler ist vorzugsweise ein Kohlenstoff enthaltender Partikel, Mischung dieser oder eine Kohlenstoff enthaltende Paste.

Der Kohlenstoff enthaltende Leitfähigkeitsvermittler umfasst besonders bevorzugt
i) Kohlenstoff enthaltende Partikel, die umfassen Ruß, Leit-Ruß, elektrochemisch hergestellten Ruß, Elektroruß, Aktivkohle, Graphit, Graphen und/oder eine Mischung davon, und/oder
ii) eine Kohlenstoff enthaltende Paste, die elektrisch leitfähige Polymere, die Heteroatome N, O und/oder S umfassen können, wie Polyanilin oder Graphen.

Es wurde gefunden, dass Elektroruß als Leitfähigkeitsvermittler wirksamer ist als Graphitpulver. Der hinreichende Anteil von Elektroruß im Anodenmaterial liegt vorzugsweise im Bereich von 50 bis 90 Gew.-% in Bezug auf die Gesamtzusammensetzung. Mit einer zwei Zellen umfassenden Batterie mit 16 cm² aktiver Elektrodenfläche könnte bereits eine Leistung ausreichend für den Betrieb eines kleinen Lüfters bereitgestellt werden.

In einer besonderen Variante der elektrochemischen Primärzelle liegt an der Kathode und/oder Anode vorzugsweise ein Druck von 0,01 bis 10 MPa an, bevorzugt von 0,5 bis 5,0 MPa, um das Pulvermaterial zu verdichten und den Innenwiderstand der Elektroden auf weniger 10 Ohm/cm zu reduzieren.

Gleichfalls Gegenstand der Erfindung ist eine mehrzellige Batterie wobei die Batterie mindestens zwei bis 15.000, insbesondere 3 bis 500, bevorzugt 4 bis 100, mit einander verbundene Primärzellen umfasst, vorzugsweise sind von den zwei bis 15.000 mit einander verbundenen Primärzellen 4 bis 100 in Serie, die weiteren entsprechend parallel geschaltet. Die Batterie wird definiert nach der DIN-Norm 40729.

Als Batterietypen kommen beispielsweise auch Hörgerätebatterien in Frage. Die Geometrie der Anode und/oder Kathode weist dann vorzugsweise eine Dimensionierung auf, dass sie in die Standard-Zylindergröße für A675, A13, A312 und/oder A10 passt.

### Ausführungsbeispiele:

Der Betrieb von Silizium enthaltenden Primärzellen mit alkalischen, wässrigen Elektrolyten hat den wesentlichen Nachteil der Korrosion des Siliziums. Einerseits wird durch die Korrosion Wasserstoff freigesetzt und andererseits beginnt der Elektrolyt ab etwa einer Konzentration von 4M an SiliziumGehalt zu gelieren.

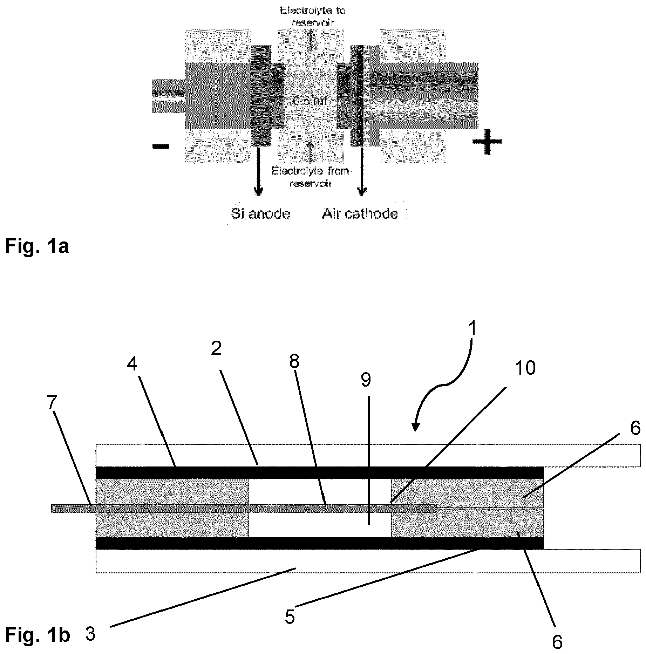

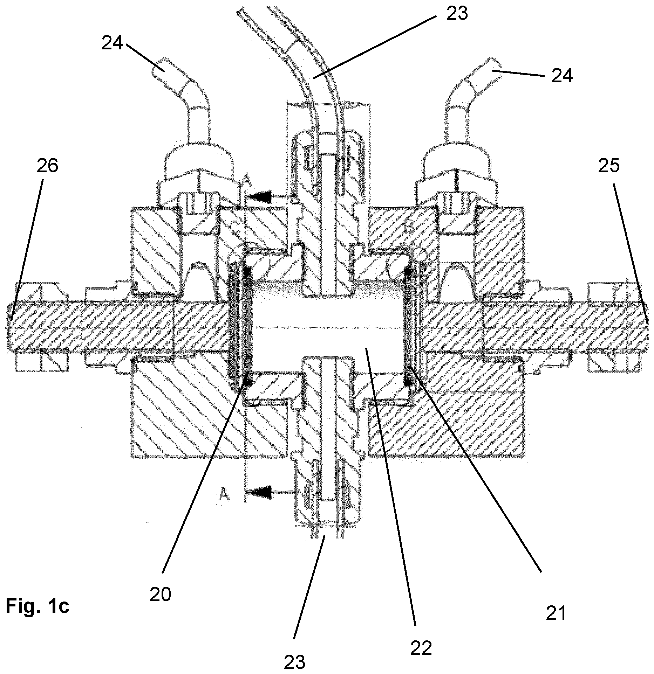

Ein prinzipieller Aufbau der Primärzelle ist in Figur 1a dargestellt. Die Primärzelle weist eine Anode aus Silizium und eine Luftkathode auf. Zwischen Anode und Kathode ist ein Reservoir zur Aufnahme eines Elektrolyten von 0,6 ml vorgesehen. Fig. 1b stellt eine andere Zellanordnung einer Primärzelle dar auf die später eingegangen wird. Figur 1.c zeigt einen realen Aufbau der Versuchszelle: 20: Anode in Form einer Scheibe umfassend Siliziumpartikel als Pulver in einem Separator bzw. als gesinterte Scheibe aus Siliziumpartikeln mit einer Kontaktfläche zum Elektrolyten mit 4,4 cm². Alternative kann eine Silizium-Kohlenstoffpaste als Anode in Form einer Scheibe eingesetzt werden, 21: Luftkathode, 22: Elektrolytreservoir 6 ml; 23: Zu-/Ableitung Elektrolytflüssigkeit; 24: Zu-/Ableitung Inertgas (Argon und/oder N₂); 25: Stromabnehmer Kathode, 26: Stromabnehmer Anode.

Zur Vermeidung der Korrosion von Silizium wurden verschiedene Verbindungen auf ihre, die Korrosion von Silizium inhibierenden Eigenschaften in einem alkalischen Elektrolyten ohne und mit Entladung untersucht, deren Ergebnisse in den folgenden Figuren dargestellt sind.

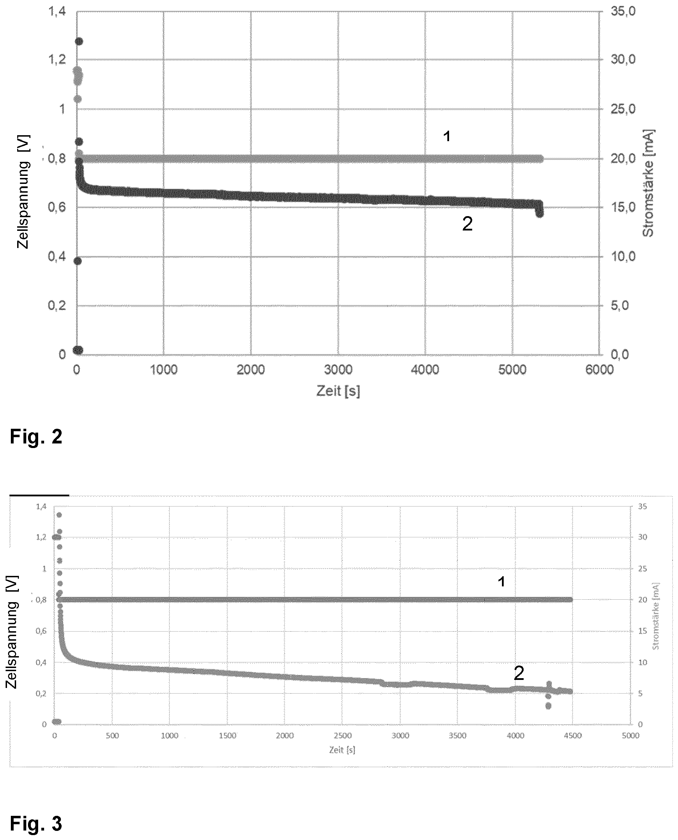

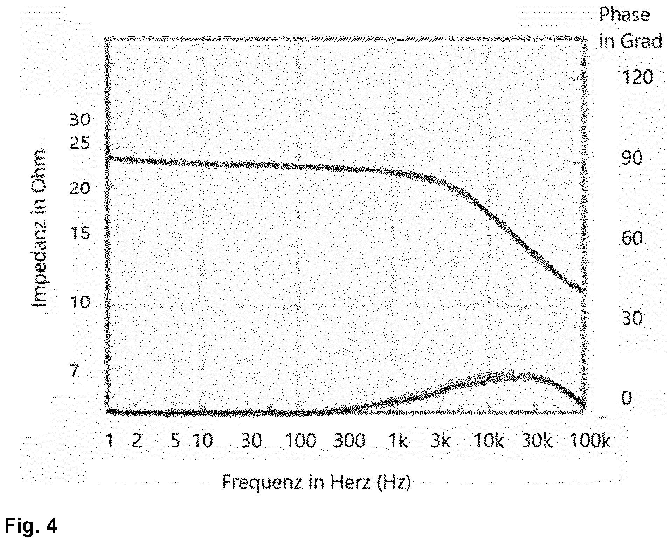

Batterieversuche A: Wässriger Elektrolyt und Inhibitoren mit Silizium-Partikeln (Partikelgröße um 0,1 Mikrometer, nanokristallin) i) bis viii) als Pulver von Siliziumpartikeln und ix) als Pressling der Siliziumpartikel jeweils als Silizium Anoden:
i) 5M KOH
ii) 5M KOH + 4000 Gew.-ppm PEG 400 (polyethylene glycol 400), Mit einer Versuchszelle mit diesem Elektolyten und Bauart nach Figur 1c konnte bei 600 mV Zellspannung eine konstanter Stromfluss von etwa 120 mA über mehr als 10 Minuten entnommen werden. Das entspricht einer Leistungsabnahme von U*I = 0,6 Volt*120 mA = 72 mW.
iii) 5M KOH + 4000 Gew.-ppm TWEEN 80 (polysorbate 80)
iv) 5M KOH + 4000 Gew.-ppm PPG 725 (poly(propylene glycol) 725)
v) 5M KOH + 4000 Gew.-ppm PPG DMC 560 (poly(propylene glycol)dimethacrylat 560)
vi) 5M KOH + 4000 Gew.-ppm PEG-4-Rapsölamid,
vii) 3M KOH + 1 Gew.-% PEG 400 (Silizium-Partikel gesintert, O₂ 11 nL/h, Elektrodenabstand ca. 2 cm, Innenwiderstand ca. 4,55 Ohm/cm²), s. Figur 2
viii) V1 Ruß-Silizium-Pulver 1,8 Gew.-% Bor in Rundzelle, OCV=1,2 Volt, Belastung auf 0,8V Strom über der Zeit, s. Figur 3
ix) Anode: Siliziumpartikel gesinterte Pressling/Tablette, Elektrodenabstand: 2 cm, KOH 3 mol/L, 1 Gew.-% PEG 400 in Rundzelle; Kathode: O₂ mit Volumen 11nL/h, gemessen wurde mit 1 Hz bis 100 kHz der Wechselstromwiderstand (Impedanz). Die Impedanz bleibt von 1 Hz bis etwa 1kHz nahezu konstant bei 23 bis 20 Ohm. Bei höheren Wechselstromfrequenzen von 1 kHz bis 100kHz und zunehmender Phasenverschiebung nimmt der Widerstand deutlich ab, siehe Figur 4

In allen Versuchen kann eine Zellspannung (V) der Primärzelle mit einem wässrigen Elektrolyten mit 5M KOH und den nachfolgend genannten Zusätzen an erfindungsgemäßen Verbindungen bestimmt werden. Es wurden Messungen durchgeführt, indem die offene Zellspannung (OCV: open circuit V) für 4 Stunden gefolgt von 116 Stunden Entladung mit 50 µA/cm² (25 °C, 50% rel. Luftfeuchtigkeit) erfolgten. Die Zellspannung ist im Vergleich zu einem Elektrolyten mit reinem KOH mit Polyalkylenoxid-Gruppen enthaltender Verbindung vermindert. In allen Versuchen konnte die Korrosionsmasse der Silizium-Partikel vermindert werden und die Konversionseffizienz mit Polyalkylenoxid-Verbindung erhöht werden. Gemessen wurde alle 4 Stunden der gemessene Elektrolytstrom, der für 5 Minuten mit einer Durchflussgeschwindigkeit von 0,1 mL/min ausgetauscht wurde.

Aus den gemessenen Elektrolytströmen wird deutlich, dass die linearsten Ströme mit PEG 400 und Tween 80 erhalten werden. Die Messungen zeigen, dass mit PPG 725 und PPG DMC für erfindungsgemäße Elektrolytzusammensetzungen die höchsten Zellspannungen im OCV Zustand und für PPG DMC bei Entladung die höchste Zellspannung erzielt wird. Demgegenüber zeigen Elektrolytzusammensetzungen mit Tween 80 sehr geringe Korrosionsmassen und die höchste Anoden Massenkonversionseffizienz. Auch mit PEG 400 kann die Korrosionsmasse reduziert werden und eine gute Anoden Massenkonversions-effizienz erzielt werden. Entsprechend bewirken Tween 80 und PEG 400 die beste Korrosionsschutzeffizienz aufgrund reduzierter Korrosionsmassen.

Die Messungen der Korrosion von Silizium-Partikeln aus von polykristallinen Wafern Si AS (100) durch Elektrolytlösungen (5 M KOH) und unterschiedlichem Siliziumgehalt im Bereich von 0,5 bis 3 molar, zeigt eine deutliche Inhibierung ab einen Gehalt von ca. 3 M Silizium im Elektrolyten. Durch Zugabe von PEG (4000 ppm-Gew.) kann eine kontinuierliche Steigerung der Inhibierung der Korrosion nachgewiesen werden. Die stärkste Inhibierung wird bei einem Gehalt von 3 mol Silizium und 4000 ppm-Gew. PEG beobachtet.

### Batterieversuche B:

Die nachfolgenden Tabellen stellen ebenfalls verwendete Proben von Silizium-Partikeln und des dort verwendeten Leitfähigkeitsvermittlers dar.

**Tabelle 1: Röntgenamorphe Silizium-Partikel**

| **Silizium-Partikel** | Primärpartikel [nm] | Agglomerate **und/oder Aggregate** [nm] | Dotierung | Si [Gew.-%] |
|---|---|---|---|---|
| **A** | 5-15 | 150-1000 | < 0,1 Gew.-ppm Intrinsischer Halbleiter | 99,99999 (electronic grade) |
| **B** | 100-300 | 200-2000 | < 10 Gew-ppm | Solar-grade 99,999 |
| **C** | 100-300 | 400-1000 | 1 Gew.-% Intrinsischer p-Leiter | 98,9 |
| **D** | 100 - 300 | 400 - 1000 | 1,8 Gew.-% Bor (5.10¹⁹/cm³) | 98,19 |

**Tabelle 2: Leitfähigkeitsvermittler enthaltend Kohlenstoff enthaltende Partikel**

| Kohlenstoff enthaltende Partikel | Kohlenstoff enthaltende Partikel | Partikelgröße [nm] | Agglomerate und/oder Aggregate [nm] | Dotierung |
|---|---|---|---|---|
| Vulcan-XC72R (Elektroruß) | | 20 bis 40 oder 25 bis 80 | 350 bis 1500 | < 100 Gew.-ppm n-Donoren und p-Akzeptoren |
| | | | 350 bis 1500 | |
| Graphit (Naturgraphit vermalen) | ca. 20% Fettanteil | 16000-63000 | Flocken, flockig | < 1 Gew.-% |

Mit den Siliziumpartikeln und den Kohlenstoffpartikeln wurden Elektrodenpasten hergestellt, die alternativ mit Bindemittel versetzt gepresst werden können.

Der Aufbau aller nach Batterieversuche B getesteten Primärzelle(n) **1** erfolgte gemäß **Figur 1b** Kontaktelektroden **2, 3**; Graphitfolie **4**, **5**; Silikonscheibe **6** mit zentraler Bohrung Durchmesser 24 mm (4,5 cm²) für Anodenmaterial **8**, Kathodenmaterial **9**; Separator **7** (Filtrierpapier), Bohrung **10** in Silikonscheibe **6** zur Aufnahme des Elektrodenmaterials.

In die Bohrung **10** einer Silikonscheibe **6** auf einer Grafitfolie **5** auf der Kontaktelektrode **3** wurde Kathodenmaterial (beispielsweise 90 % MnO₂ + 10 % Graphit + Elektrolytlösung) eingebracht und der Separator **7** aufgelegt. Auf einer Seite ragt der Separator **7** heraus, damit beim Zusammenpressen überschüssige Elektrolytlösung heraustreten kann. Die obere Silikonscheibe 6 wird aufgelegt und in die Bohrung das jeweilige Anodenmaterial (als Anodenpaste) eingefüllt, und die Graphitfolie **4** und Kontaktelektrode **2** aufgelegt und mit 900 N (entspr. 20 bar bei **4**,5 cm²) zusammengepresst. Die Kraft verteilt sich über die Elektrodenpasten und Silikonscheiben.

Mit einer Primärzelle gemäß obigem Primärzellenaufbau kann an den Elektroden eine Spannung U gemessen werden. Im Zuge von Performancetests wird alle 30 Sekunden die Strombelastung (I) erhöht.

### B Vergleichbeispiel 1:

Die Spannung einer Versuchszelle mit Silizium- und Kohlenstoff-Partikeln als Anodenmaterial gemäß Tabelle 1 und 2 mit Siliziumpartikel B 80 Gew.-% und 20 Gew.-% Graphit und einer Kathode bestehend aus 90 mol-% MnO₂ und 10 mol-% Graphit lag mit wässriger, 20 mol-%iger Ammoniumchloridlösung (NH₄Cl) als Elektrolyt zu Beginn bei rund 400 mV. Wird das Anodenmaterial Silizium gegen Zinkpulver (battery grade) getauscht ergibt sich eine leistungsstarke Batterie mit einer Anfangsspannung von rund 1200 mV und einigen 10 mW/cm² Leistungsdichte bei ansonsten gleichem Versuchsaufbau.

Messungen des Innenwiderstandes der Anode und damit des Anodenmaterials mit Silizium-Partikeln B 80 Gew.-% und 20 Gew.-% hohe Werte im Bereich von 4 Kilo-Ohm je cm². Die Strombelastung des Anodenmaterials mit Silizium-Partikeln B 20 Gew.-% und 80 Gew.-% Graphit lag bei 100 µA/cm2 bei einer Leistungsdichte von max. ca. 0,01 mW/cm².

Das Anodenmaterial wurde dazu feucht mit wässrigem Elektrolyten vermessen.

### B Beispiel 2:

Ein zu Beginn innig trocken vermischtes Anodenmaterial mit 20 Gew.-% Silizium-Partikel B und 80 Gew.-% Graphit und danach mit wässriger Elektrolytlösung versetzter Messaufbau einer erfindungsgemäßen Primärzelle zeigt eine Spannung U, die innerhalb von 75 min von ca. 150 mV auf ca. 400 mV anstieg. Bei der daran anschließenden Belastungsprobe [U(I)-Messung] konnten Leistungsdichten von bis zu 0,185 mW/cm² erzielt werden. In der Erholungsphase stieg U innerhalb von 10 min wieder auf den Ausgangwert an und fiel dann nach ca. 90 min langsam wieder ab (ca. 250 mV).

Beispiel 2 legt nahe, dass eine weitere Leistungssteigerung mittels homogenerer Durchmischung sowie mit kleineren Silizium-Partikeln und kleineren Partikeln des Leitfähigkeitsvermittlers erzielt werden können. Bevorzugt ist dabei eine abgestimmte vorzugsweise bimodale Verteilung der Partikelgrößen.

### Verbesserung des Zellenaufbaus:

Die Versuchsbatterien wurden mit Hilfe eines speziell für Batterieversuche konzipierten Montageschraubstockes zusammengesetzt. Zunächst wurden Anoden- und Kathoden-materialien jeweils gründlich im trockenen Zustand gemörsert, um einen guten Kontakt zwischen aktivem Material und Leitfähigkeitsvermittler zu gewährleisten und anschließend jeweils durch Zugabe einer geeigneten Menge Elektrolytflüssigkeit sowie von einer erfindungsgemäßen linearen Polyalkylenoxid-Gruppen enthaltenden Verbindung, hier PEG-4-Rapsölamid, im Mörser zu einer streichfähigen Paste verrieben. Diese Pasten wurden in den jeweiligen Elektrodenraum hineingestrichen. Als Separator und Regulativ für die Elektrolytflüssigkeit wurde ein benetztes Stück Filtrierpapier verwendet. Die Paste im Anodenraum wurde so glattgestrichen, dass eine leichte Wölbung vorhanden war, so dass sichergestellt war, dass der anschließend mit dem Montageschraubstock erzeugte Anpressdruck vor Allem die Elektrodenpasten komprimierte, so dass ein guter Kontakt zwischen aktivem Material und Leitfähigkeitsvermittler gegeben war. Dass eine hinreichende Leitfähigkeit in den Elektrodenpasten vorlag, konnte dadurch gezeigt werden, dass während einiger Leistungsmessungen der Anpressdruck verändert wurde. Hierbei wurde in keinem Fall eine nennenswerte Leistungsänderung beobachtet.

Bei den Versuchsbatterien wurden U(I)-Kurven aufgenommen. Da während jeder Belastungsstufe, insbesondere bei höherer Belastung, die Spannung sich entsprechend reduzierte, wurde die Messfrequenz erhöht (Messintervalle von 30 Sekunden), womit dann mit dieser Einstellung alle notwendigen Messaufzeichnungen erfolgten.

Für die Belastungsmessungen wurden je nach Leerlaufspannung der Zelle eine Diode, zwei in Serie geschaltete Dioden, eine einzelne Schottky-Diode oder eine Diode mit einer Schottky-Diode in Serie geschaltet als "Last" eingesetzt. Die auf diese Weise gewonnenen Belastungskurven über der Zeit lassen vor allem Rückschlüsse auf die Belastungsfähigkeit bzw. deren Rückgang über längere Zeitperioden zu. Andererseits sind diese Belastungskurven nur sehr eingeschränkt mit den U(I)-Kurven vergleichbar. Für ein tiefergehendes Verständnis sei auf die elektrotechnische Fachliteratur bzw. Empfehlung der Halbleiterhersteller zur Verwendung von Dioden in der Schaltungstechnik verwiesen.

Für eine ausgewählte Demobatterie wurde anhand von Wägungen die Si-Dichte in der Anodenpaste aus 30 Gew.-% Silizium-Partikel D und 70 m-% Vulcan-XC72R zu 0,104 g/cm³ bestimmt. Unter Zugrundelegung dieses Wertes wurde für die Demobatterie die theoretische Kapazität berechnet. Sie betrug ca. 1000 As. Demgegenüber betrug der Stromverbrauch während der durchgeführten Belastungsmessungen 20 As, das sind 2 % der theoretischen Kapazität. Das reelle Kapazitätsende der Batterie war hierbei auch nach zwei Wochen Wechselbetrieb noch nicht erreicht.

### Spezifischer Widerstand und Leitfähigkeitsmessungen an Si-C-Anodenmaterialien und MnO₂-C-Kathodenmaterialien

Für die Messung des spezifischen elektrischen Widerstandes wurden die Proben in einem Kunststoffring zwischen zwei Edelstahlkolben (Fläche 5,0 cm²), denen jeweils ein Kupferblech für Stromzufuhr und Spannungsabgriff unter- bzw. aufgelegt war, mit definierter Kraft zusammengepresst. Für jede Kraftstufe wurden Stromstärke, Spannung und der Abstand zwischen den Kupferblechen gemessen. Dieselben Werte wurden auch mit der probenfreien Versuchsanordnung gemessen und die betreffenden ohmschen Widerstände und Blechabstände von den entsprechenden Werten, die mit eingefüllten Proben gemessen wurden, subtrahiert.

Gemessen wurde die Leitfähigkeit. Ein spezifischer Widerstand von 1 Ω*cm entspricht bei der Schichtdicke von 0,2 cm in den Versuchsbatterien und einer Stromdichte von 10 mA/cm² einem durch den ohmschen Widerstand der betreffenden Elektrodenpaste verursachten Spannungsabfall von im ungünstigsten Fall 2 mV.

Für die Silizium-Partikel (Silizium-Partikel B [Gew.-%], Silizium-Partikel D [Gew.-%], Mn₂O [Gew.-%]) wurde nachgewiesen, dass sowohl für das Anodenmaterial als auch für das Kathodenmaterial bei gleichem Massenanteil durch Verwendung von Vulcan-XC72R-Ruß eine erheblich größere Leitfähigkeit erzielt wird gegenüber Graphit als alternativer Leitfähigkeitsvermittler.

Die Leitfähigkeiten hängen bei Beiden vom Anpressdruck ab. Die für 0,9 MPa angegebenen Werte für den spezifischen Widerstand wurden während der Messphase mit schrittweiser Druckerhöhung gemessen. Bei Rücknahme des Drucks zeigt der Verlauf des spezifischen Widerstandes, wie auch der Verlauf der Schichtdicke, eine ausgeprägte Hysterese.

Die Leitfähigkeiten der reinen Si-Pulver sind bei Raumtemperatur sehr gering, bei Messungen mit höherer Spannung zeigt sich jedoch ein verändertes Verhalten, was einerseits auf nicht vermeidbare Oxidschichten auf der Silizium-Partikeloberfläche und andererseits auf die Reinheiten des Siliziums zurückzuführen ist.

**Tabelle 3: Si-Partikel Leitfähigkeiten und Druck**

| Si-Partikel | Leitfähigkeit 3,6 MPa | Leitfähigkeit 0,9 MPa |
|---|---|---|
| D | < 0,5 nS/cm | < 0,5 nS/cm |
| B | < 2 nS/cm | < 0,5 nS/cm |
| A | < 0,5 nS/cm | < 0,5 nS/cm |
| C | 1 mS/cm | 0,03 mS/cm |

### Vorversuche zur Charakterisierung der Beispiel 3 Versuchszelle mit Silizium-Partikeln B und modifizierter NH₄Cl-Lösung

Es wurde zuerst die Beständigkeit des Siliziummaterials B gegen unterschiedliche wässrige Elektrolytlösungen getestet um danach den Zusatz bzw. die Zusätze auszuwählen. Die Versuche zeigen, dass die Silizium-Partikel B beständig gegen Wasser und gegen konzentrierte Lösungen von NH₄Cl, NaCl oder Zitronensäure (keine Gasentwicklung erkennbar) sind, eingeschränkt beständig gegen verdünnte Lösungen von Na₂CO₃ (Gasentwicklung feststellbar; Probe nach einigen Tagen nicht vollständig umgesetzt), und unbeständig gegen konzentrierte Lösungen von KOH oder Na₂CO₃ (starke bzw. erhebliche Gasentwicklung; Probe löst sich innerhalb weniger Minuten bzw. mehrerer Tage vollständig).

Als Kathodenmaterial wurde hier ein Gemisch aus 90 Gew.-% MnO₂ und 10 Gew.-% Graphitpulver eingesetzt. Sowohl mit dem zunächst eingesetzten MnO₂ (p.a.) als auch mit dem anschließend verwendeten MnO₂ (gefällt, aktiviert) und MnO₂, (battery grade) wurden mit Zink-basierten Vergleichszellen gute Leistungen erzielt, so dass keine dieser MnO₂-Qualitäten als Ursache für eine geringe Leistungsfähigkeit in Frage kommen. Quelle für das verwendete MnO₂ vom Typ HH-P ist die Firma Tosoh Hyuga Corporation, JP.

Aufgrund der Erwartung, dass mit Hilfe alkalischer Elektrolyte eine verbesserte Leistung erreichbar sein sollte, wurden Versuche mit Na₂CO₃-haltigen NH₄Cl-Lösungen durchgeführt.

**B Beispiel 3** beschreibt nun die Versuchszelle mit Silizium-Partikeln B und mit Na₂CO₃-Zusätzen modifizierter NH₄Cl-Lösung (Elektrolyt).

U(I)- und P/A(I)-Kennlinien der Versuchszelle (Ref. 160118; Anodenmaterial: 20 Gew.-% Silizium-Partikel B + Graphit, Elektrolyt: 18 Gew.-% NH₄Cl und 2 Gew.-% Na₂CO₃ in H₂O, Kathodenmaterial: 90 Gew.-% MnO₂, gefällt, aktiv + Graphit; y-Achse: U [mV] oder P/A [mW/cm²], x-Achse: I/A [mA/cm²] Definition: mV = Millivolt = 10⁻³ Volt; mW = Milliwatt = 10⁻³ Watt; mA = Milliampere = 10⁻³ Ampere) zeigen mit diesem schwach alkalisierten Elektrolyten eine deutlich verbesserte Leistungsfähigkeit. Dies ist im Wesentlichen auf eine entsprechend höhere Zellspannung (U0 = ca. 700 mV) zurückzuführen.

### Gemessene Schüttdichten in g/mL

Silizium-Partikel B: 0,114; 0,110
Silizium-Partikel D: 0,027; 0,024
Silizium-Partikel A: 0,039; 0,039
Vulcan-XC72R: 0,080
Graphit: 0,30
30 Gew.-% Silizium-Partikel D + Vulcan-XC72R 0,053; 0,053; 0,053
30 Gew.-% Silizium-Partikel A + Vulcan-XC72R 0,064; 0,064
Zn-Staub "ZP001", battery grade 4,08

## Patentansprüche

1. Elektrochemische Primärzelle aufweisend eine Anode, eine Kathode sowie mindestens einen Separator, wobei der Separator die Kathode und die Anode voneinander separiert, wobei die Primärzelle eine Elektrolytlösung enthält, wobei die Kathode als Material Mangandioxid und optional Kohlenstoff enthaltenden Leitfähigkeitsvermittler umfasst, **dadurch gekennzeichnet, dass** die Anode als Anodenmaterial Silizium umfasst, und zumindest ein Anteil des Siliziums in Form von Silizium-Partikeln umfassend Silizium-Partikel mit einer Partikelgröße im Bereich von 0,1 µm bis 20 µm oder als Folie mit einer Schichtdicke von größer gleich 0,1 µm vorliegt.

2. Primärzelle nach Anspruch 1, **dadurch gekennzeichnet, dass** die Silizium-Partikel als i) kristalline Silizium-Partikel umfassend monokristalline und/oder polykristalline Silizium-Partikel und/oder ii) als Silizium-Partikel umfassend Agglomerate und/oder Aggregate von im wesentlichen amorphen Silizium-Primärpartikeln mit einer Primärpartikelgröße von 1 nm bis 3000 nm oder Gemische dieser vorliegen, wobei insbesondere die Agglomerate und/oder Aggregate eine Größe von 100 bis 3000 nm aufweisen.

3. Primärzelle nach Anspruch 1 oder 2, **dadurch gekennzeichnet, dass** die Elektrolytlösung eine wässrige, alkalische Elektrolytzusammensetzung umfassend mindestens eine lineare oder verzweigte Polyalkylenoxid-Gruppen aufweisende Verbindung mit mindestens drei Alkylenoxid-Gruppen in der Verbindung oder Gemische von mindestens zwei dieser Verbindungen umfasst, wobei die Alkylenoxid-Gruppen in der Polyalkylenoxid-Gruppen aufweisenden Verbindung ausgewählt sind aus Alkylenoxid-Gruppen mit 2 bis 6 C-Atomen je Alkylenoxid-Gruppe.

4. Primärzelle nach Anspruch 3, **dadurch gekennzeichnet, dass** die Polyalkylenoxid-Gruppen aufweisende Verbindung mindestens eine terminale Gruppe ausgewählt aus Hydroxy-Gruppen, Alkyl-Gruppen, Alkoxy-Gruppen, Alkenyl-Gruppen, Alkenyloxid-Gruppen, Carbonsäure-Gruppen, Carbonsäureester-Gruppen, Carbonsäureamid-Gruppen, aromatischen-Gruppen und/oder Gruppen enthaltend cyclische-Ether aufweist.

5. Primärzelle nach Anspruch 1, **dadurch gekennzeichnet, dass**
i) das Material der Kathode der Primärzelle Mangandioxid und optional einen Kohlenstoff enthaltenden Leitfähigkeitsvermittler aufweist, wobei die Primärzelle in einem hermetisch abgeschlossenen Gehäuse vorliegt, oder
ii) die Kathode der Primärzelle eine Luftkathode ist und das Material der Kathode der Primärzelle Manganoxid, insbesondere Manganoxid und/oder Mangandioxid, Platin, Platin-Basis, Silber einzeln oder gemeinsam als Katalysator umfasst und optional einen Kohlenstoff enthaltenden Leitfähigkeitsvermittler aufweist, insbesondere weist die Luftkathode eine für Kohlendioxid undurchlässige Membran auf.

6. Primärzelle nach einem der Ansprüche 1 bis 5, **dadurch gekennzeichnet, dass** in der Elektrolytzusammensetzung mindestens eine terminale Gruppe der Polyalkylenoxid-Gruppen aufweisenden Verbindung ausgewählt ist aus Hydroxy-Gruppe, Carbonsäure-Gruppe, Carbonsäureester-Gruppe, Carbonsäureamid-Gruppe und mindestens eine weitere terminale Gruppe ausgewählt ist aus Hydroxy-Gruppen, Alkyl-Gruppen, Alkoxy-Gruppen, Alkenyl-Gruppen, Alkenyloxid-Gruppen, Carbonsäureester-Gruppen, Carbonsäureamid-Gruppen, aromatischen-Gruppen, insbesondere Alkyl-funktionalisierte Phenyl-Gruppen, besonders bevorzugt Polyalkylenoxid-Gruppen aufweisende Verbindungen eines Rapsölamid, 4-(1,1,3,3-Tetramethylbutyl)-phenyl-polyethyleneglykol, bevorzugt 4-(1,1,3,3-Tetramethylbutyl)phenyl-polyethylene glycol, t-Octylphenoxypolyethoxyethanol, Polyethylene glycol *tert*-octylphenyl ether und/oder Gruppen enthaltend cyclische-Ether.

7. Primärzelle nach einem der Ansprüche 3 bis 6, **dadurch gekennzeichnet, dass** die verzweigten Polyalkylenoxid-Gruppen aufweisende Verbindung umfassend mindestens eine Carbonsäureester-Gruppe einer Fettsäure, Glyceryl-Fettsäuren, insbesondere Glyceryl-Oleate, Glyceryl-Caprylate, Glyceryl-Linoleate, Glyceryl-Stearate, Glyceryl-Palmitate, Öl-Amiden, wie Polyalkylenoxide eines Rapsölamids, Ether von Kohlenhydraten, insbesondere Ether von Furanosen oder Pyranosen, die optional Carbonsäureester von Fettsäure und Gemische umfassend mindestens zwei der genannten Verbindungen, besonders bevorzugt sind Polyalkylenoxid-Gruppen aufweisende Verbindung umfassend mindestens eine Carbonsäureester-Gruppe einer Fettsäure, Glyceryl-Fettsäuren, insbesondere Glyceryl-Oleate, Glyceryl-Caprylate, Glyceryl-Linoleate, Glyceryl-Stearate, Glyceryl-Palmitate, Polyalkylenoxid-Gruppen aufweisende Verbindung umfassend Aminde von Glyceryl-Fettsäuren, insbesondere Rapsölamid, und Gemische umfassend mindestens zwei der vorgenannten Glyreyl-Fettsäure Amide davon.

8. Primärzelle nach einem der Ansprüche 3 bis 7, **dadurch gekennzeichnet, dass** die Alkylenoxid-Gruppen in der Polyalkylenoxid-Gruppen aufweisenden Verbindung ausgewählt sind aus Alkylenoxid-Gruppen mit 2 bis 4 C-Atomen je Alkylenoxid-Gruppe.

9. Primärzelle nach einem der Ansprüche 3 bis 8, **dadurch gekennzeichnet, dass** die Polyalkylenoxid-Gruppen aufweisende Verbindung mindestens fünf Alkylenoxid-Gruppen, insbesondere bis einhundert Alkylenoxid-Gruppen, mit 2 bis 4 C-Atomen je Alkylenoxid-Gruppe in der Verbindung aufweist.

10. Primärzelle nach einem der Ansprüche 3 bis 9, **dadurch gekennzeichnet, dass** die Elektrolytzusammensetzung
- 2,0 bis 99,0 Gew.-% Wasser und
- 0,0001 bis 15 Gew.-% Polyalkylenoxid-Gruppen aufweisende Verbindungen oder Gemische dieser und
- 0,001 bis 40 Gew.-% Alkalihydroxid insbesondere Kaliumhydroxid,
in Bezug auf die Gesamtzusammensetzung von 100 Gew.-% enthält.

11. Primärzelle nach einem der Ansprüche 1 bis 10, **dadurch gekennzeichnet, dass** die Silizium-Partikel einen Gehalt an Bor von 10 Gew.-ppm bis 1,8 Gew.-% in Bezug auf die Gesamtzusammensetzung der Silizium-Partikel von 100 Gew.-% aufweisen.

12. Mehrzellige Batterie und System umfassend mindestens eine mehrzellige Batterie, **dadurch gekennzeichnet, dass** die mehrzellige Batterie mindestens zwei bis 15.000 mit einander verbundene Primärzellen nach einem der Ansprüche 1 bis 11 umfasst, vorzugsweise sind die zwei bis 15.000 mit einander verbundenen Primärzellen in Serie geschaltet.

13. System zur Datenverarbeitung umfassend Mittel zur Ausführung eines Verfahrens für den Betrieb einer Primärzelle nach einem der Ansprüche 1 bis 11, oder eines Systems oder einer mehrzelligen Batterie nach Anspruch 11.

14. System zur Datenverarbeitung nach Anspruch 13, wobei das Verfahren für den Betrieb umfasst mindestens einen Verfahrensschritt in dem ein Elektrolytmanagement erfolgt, das umfasst i) Zuführung und/oder Entfernung des Elektrolyten in mindestens einer Primärzelle, und/oder ii) Einstellen der Temperatur des Elektrolyten in mindestens einer Primärzelle, insbesondere des Elektrolyten in den Primärzellen (der Batterie) auf eine definierte Temperatur, insbesondere auf eine Temperatur größer gleich 26 °C, insbesondere ist das Verfahren ein computerimplementiertes Verfahren (ein von einem Computer ausgeführtes Verfahren).

15. Computerprogrammprodukt, umfassend Befehle, die bei der Ausführung des Programms durch einen Computer diesen veranlasst, das Verfahren nach den Ansprüchen 13 oder 14 für den Betrieb einer Primärzelle nach einem der Ansprüche 1 bis 12 oder für den Betrieb eines Systems nach Anspruch 16 auszuführen.

16. Computer lesbares Medium, umfassend Befehle, die bei der Ausführung durch einen Computer diesen veranlassen, das Verfahren nach einem der Ansprüche 1 bis 11 auszuführen und/oder das Verfahren nach einem der Ansprüche für den Betrieb einer mehrzelligen Batterie oder eines Systems umfassend eine mehrzellige Batterie nach Anspruch 12 auszuführen.
